# EUROPÄISCHE PATENTSCHRIFT

(11) **EP 0 940 072 B1**
(45) Veröffentlichungstag und Bekanntmachung des Hinweises auf die Patenterteilung: **15.12.2004**
(21) Anmeldenummer: 99102994.3
(22) Anmeldetag: 16.02.1999
(51) Int. Cl.: A01F 15/08, A01F 15/04, A01F 15/06

(54) **Presse mit einem Ballenpressraum, einem Kolben und einem hydraulischen Betätigungsglied**
Press with a bale compression chamber, a ram and an hydraulic drive member
Presse à balles avec chambre de compression, un piston et un dispositif d'entrainement hydraulique

(30) Priorität: 03.03.1998 US 34091
(43) Veröffentlichungstag der Anmeldung: 08.09.1999
(73) Patentinhaber: DEERE & COMPANY, Moline, Illinois 61265-8098 (US)
(72) Erfinder: O'Brien, Stephen Edwin, Ottumwa, Iowa 52501 (US); Roth, Darin Ledru, Ottumwa 52501 (US)
(74) Vertreter: Magin, Ludwig Bernhard

(56) Entgegenhaltungen:
- US-A- 4 202 262
- US-A- 4 524 574

## Beschreibung

Die Erfindung betrifft eine Presse mit einem Ballenpreßraum, einem Kolben und einem hydraulischen Betätigungsglied zum Bewegen des Kolbens in dem Ballenpreßraum.

Die US-A-4,202,262 offenbart eine Presse mit einem Preßkolben, der von einem Hydraulikzylinder oszillierend bewegt wird.

Das der Erfindung zugrunde liegende Problem wird darin gesehen, daß der Hydraulikkolben einen großen Hub aufweist und somit auch von einer großvolumigen Druckquelle gespeist werden muß.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise findet eine Übersetzung zwischen dem kleinen Weg der Betätigungsvorrichtung um dem Kolben mittels der Lenker statt, so daß die Betätigungsvorrichtung kleiner ausgelegt werden kann. Auf diese Weise kann auch einer möglichen Kavitation vorgebeugt werden, die entstehen könnte, wenn aufgrund hoher Strömungsgeschwindigkeiten der Flüssigkeitsstrom abreist.

Eine wesentliche Reduzierung der Hublänge wird erreicht, wenn das Verhältnis 1:2 beträgt.

Das Verhältnis zwischen den Hüben der Betätigungsvorrichtung und dem Kolben kann dadurch variiert werden, daß die Betätigungsvorrichtung an einer entsprechenden Stelle auf der Länge des ersten Lenkers angreift, die entsprechend gewählt wird.

Die Betätigungsvorrichtung ist in der Lage, die von ihr aufgebrachte Kraft optimal in die Lenker einzuleiten, wenn die jeweiligen Längsachsen senkrecht aufeinander stehen und somit seitliche Kräfte vermieden werden.

Wenn sich der ausgefahrene Kolben und die Lenker in ihrer gestreckten Lage entlang einer gemeinsamen Achse erstrecken, verharrt der Kolben relativ lange in seiner ausgefahrenen Stellung und verstärkt somit die Verdichtung.

Eine Anordnung der Betätigungsvorrichtung derart, daß bei geknickten Lenkern ihre Enden beiderseits der gemeinsamen Längsmittenachse des Ballenpreßraums liegen, hat den Vorteil, daß zum Einfahren der Betätigungsvorrichtung nur der Ringraum des Hydraulikmotors beaufschlagt werden muß, was weniger Druckflüssigkeit bedarf.

Das aus beiden Lenkern zusammengesetzte Gestänge kann mit der vollen von der Betätigungsvorrichtung aufbringbaren Kraft in seine gestreckte Lage gebracht werden, wenn hierzu die Betätigungsvorrichtung ausgefahren, d.h., die Kolbenseite mit Druckflüssigkeit beaufschlagt wird.

Je nach den vorhandenen oder zu verwirklichenden geometrischen Verhältnissen kann die Betätigungsvorrichtung auch direkt an der Verbindung der beiden Lenker angreifen, z. B. auf einer gemeinsamen Achse, Bolzen oder dergleichen. Auf diese Weise können die Biegekräfte auf die Lenker reduziert werden.

Die erfinderische Lehre läßt sich auch dadurch verwirklichen, daß die Betätigungsvorrichtung an dem zweiten Lenker angreift, der die Funktion eines Pleuels einnimmt.

Ein häufiger Richtungswechsel der Betätigungsvorrichtung wird dadurch vermieden, daß er mit einem Hub den Kolben zweimal in seine Ausgangslage zurückzieht, indem er nämlich Endstellungen auf beiden Seiten der Längsmittenachse einnehmen kann.

In der Zeichnung sind zwei nachfolgend näher beschriebene Ausführungsbeispiele der Erfindung dargestellt. Es zeigt:
- Fig. 1: eine Ballenpresse in schematischer Darstellung mit einem Preßkolben in einer Endstellung und in Seitenansicht,
- Fig. 2: die Ballenpresse nach Figur 1 mit dem Preßkolben in einer anderen Endstellung,
- Fig. 3: die Ballenpresse mit einer anderen Anordnung des Antriebs des Preßkolbens,
- Fig. 4: einen elektrohydraulischen Schaltkreis zum Betätigen des Preßkolbens und
- Fig. 5: ein Diagramm mit einer Darstellung der Stellung des Preßkolbens über der Zeit.

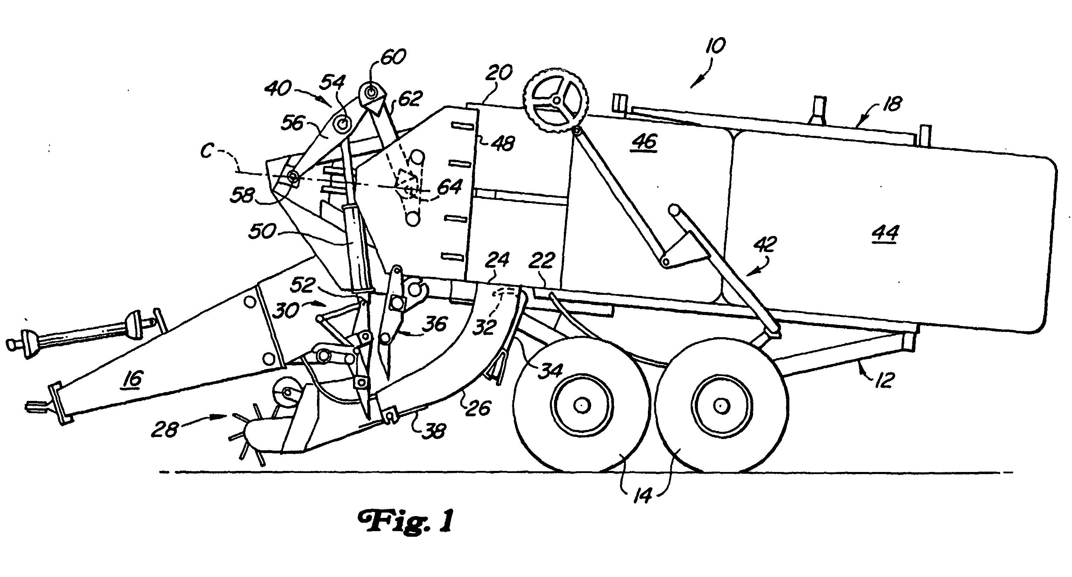

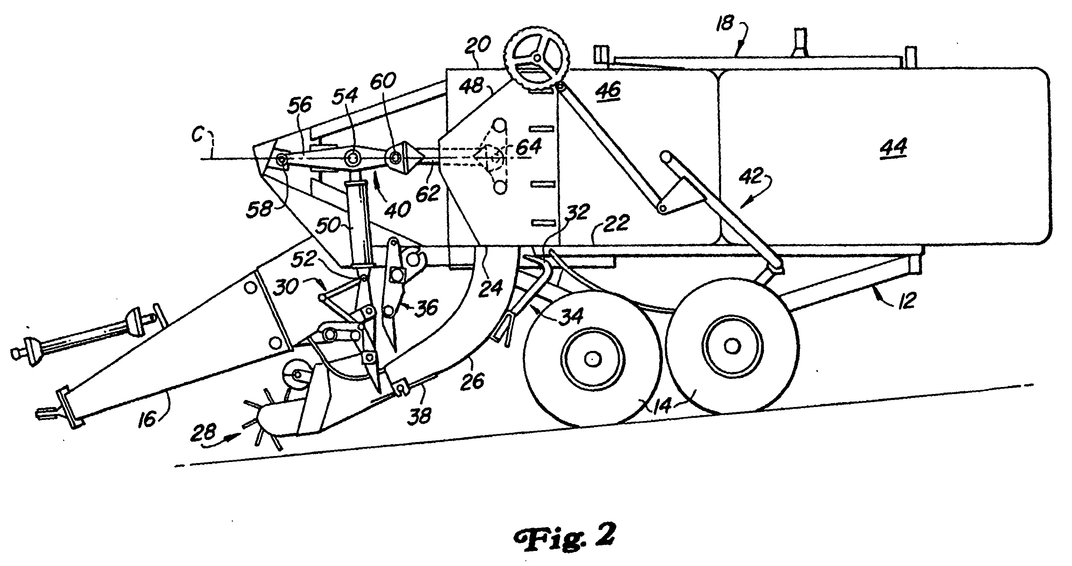

In den Figuren 1 und 2 ist eine Presse 10 in der Form einer Großballenpresse zum Herstellen quaderförmiger Ballen gezeigt, die einen Rahmen 12 enthält, der auf Bodenstützrädern 14 in Tandemanordnung abgestützt ist. Eine Deichsel 16 ist an den Rahmen 12 angeschlossen und erstreckt sich von diesem aus nach vorne und ist so ausgebildet, daß sie an ein Zugfahrzeug, wie einen nicht gezeigten Ackerschlepper, angeschlossen werden kann, der mit einer Zapfwelle ausgerüstet ist, um Leistung zum Antreiben verschiedener angetriebener Komponenten der Presse 10 zu liefern. Ein Ballenpreßraum 18 oder eine Kammer von rechteckförmigem Querschnitt wird teilweise von oberen und unteren Wänden 20 bzw. 22 gebildet, wobei die untere Wand 22 mit einem Guteinlaß 24 versehen ist, an den ein gekrümmter Zuführkanal 26 angeschlossen ist, der als ein Vorpreßraum dient, wie dies nachfolgend beschrieben wird. Eine Aufnahmevorrichtung 28 in der Art einer Pick-up und mit einer zur Mitte fördernden Schnecke ist vor dem Zuführkanal 26 angeordnet, um ein Schwad von Erntegut vom Boden aufzuheben und es an eine Verdichtergabel 30 abzugeben, die dazu dient, Erntegut in dem Zuführkanal 26 zu verdichten, bis sich eine Ladung von vorgewählter Dichte stromabwärts von Fingern 32 einer Rückhaltevorrichtung 34 angesammelt hat, wobei die Rückhaltevorrichtung 34 für eine Bewegung zwischen einer Rückhaltestellung, in der die Finger 32 in der Nähe des Guteinlasses 24 (Fig. 1) in den Zuführkanal 26 hineinragen, und einer Zuführstellung, in der die Finger 32 aus dem Zufuhrkanal 26 herausgezogen sind (Fig. 2), schwenkbar montiert sind, um es der Ladung Erntegut zu ermöglichen, mittels eines Ladegabelzusammenbaus 36 über den Guteinlaß 24 in den Ballenpreßraum 18 hineingestopft zu werden. An einer vorderen unteren Stelle des Zufuhrkanals 26 ist eine federbelastete Klappe 38 schwenkbar montiert, die in Abhängigkeit von sich in dem Zufuhrkanal 26 befindlichem Erntegut schwenkt, das eine gewünschte Dichte erreicht, um die Bestromung eines elektrischen Steuerkreislaufs (nicht gezeigt) zu bewirken, der entsprechende Antriebsverbindungen herstellt, die zuerst bewirken, daß die Rückhaltevorrichtung 34 sich so bewegt, daß sie die Finger 32 aus der sperrenden in Figur 1 gezeigten Stellung zurückzieht, und dann den Ladegabelzusammenbau 36 derart aktiviert, daß daraufhin die Verdichtergabel 30 durch den Zufuhrkanal 26 gleiten und die Ladung des Ernteguts in den Ballenpreßraum 18 bewegen kann. Wenn die Ladung des Ernteguts einmal in den Ballenpreßraum 18 gestopft ist, wird ein Kolbenmechanismus 40, der vor dem Rahmen 12 angeordnet ist und den Gegenstand der vorliegenden weiter unten mehr im Detail beschriebenen Erfindung bildet, in einer gesteuerten Reihenfolge nach dem Ladegabelzusammenbau 36 betätigt, um das Erntegut nach hinten in den Ballenpreßraum 18 zu bewegen, wo es in einem Stapel verdichtet wird, wie dies im Stand der Technik gut bekannt ist. Nachdem der Stapel von verdichtetem Material eine vorgewählte Länge erreicht hat, wird ein Nadelzusammenbau 42 zum Liefern von Bindegarn, der mehrere gekrümmte Nadeln enthält, betätigt, um mehrere Garnstränge einer entsprechenden Anzahl nicht gezeigter Knoter zuzuführen, die so funktionieren, daß sie Garnlängen um die vorgewählte Länge der Stapel legen, um einen Ballen 44 zu bilden, der zum Entladen fertig ist, was dann geschieht, wenn er von einem Ballenteil 46 aus dem rückwärtigen Endbereich des Ballenpreßraums 18 herausgedrückt wird, wenn er in seiner Länge zunimmt, weil neue Ladungen von Erntegut in den Ballenpreßraum 18 gestopft werden.

Nimmt man wieder Bezug auf die Einzelheiten des Kolbenmechanismus 40, dann ist zu erkennen, daß letzterer einen Kolben 48 enthält, der für eine hin- und hergehende Bewegung in dem Ballenpreßraum 18 zwischen einer zurückgezogenen Stellung vor dem Guteinlaß 24, wie es in Figur 1 gezeigt ist, und einer ausgefahrenen Stellung rückwärtig des Guteinlasses 24, wie dies in Figur 2 gezeigt ist, angeordnet ist. Diese Bewegung des Kolbens 48 hat zum Ergebnis, daß Ladungen von Erntegut, die aus dem Zuführkanal 26 in den Ballenpreßraum 18 eingeführt werden, gegen einen Stapel von Erntegut verdichtet werden, was einen teilweise gebildeten Ballenteil 46 und/oder den kompletten Ballen 44 einschließt. Der Kolbenmechanismus 40 enthält weiterhin eine aus- und einfahrbare Betätigungsvorrichtung 50, die hier als eine doppeltwirkende Hydraulikzylinder-kolben-Einheit dargestellt ist, deren Zylinderende wie mit einem Bolzen 52 schwenkbar an den Rahmen 12 an einer Stelle oberhalb der Verdichtergabel 30 verankert ist. Das kolbenseitige Ende der Betätigungsvorrichtung 50 ist, an einer Verbindungsstelle 54, etwa mit einem Bolzen, an einer Stelle zwischen gegenüberliegenden Enden eines als Kurbelarm dienenden ersten Lenkers 56 angeschlossen, dessen vorderer Endbereich an einer Lagerstelle 58 schwenkbar an den Rahmen 12 angeschlossen ist. Ein rückwärtiger Endbereich des ersten Lenkers 56 ist in einer Lagerstelle 60, etwa mit einem Bolzen, an einen vorderen Endbereich eines zweiten als Pleuelstange funktionierenden Lenkers 62 angeschlossen, dessen rückwärtiger Endbereich in einer Lagerstelle 64, etwa mittels eines Bolzens, an einen Mittenbereich des Kolbens 48 angeschlossen ist. Es wird hier darauf hingewiesen, daß die verbindenden Bolzen der Lagerstellen 58 und 64 entlang einer Linie von Zentren angeordnet sind, die entlang oder ungefähr entlang einer mittigen Längsachse des Ballenpreßraums 18 liegt. Dies hat zum Ergebnis, daß die Reaktionskraft des Ernteguts, das auf den Kolben 48 wirkt, im wesentlichen von der Betätigungsvorrichtung 50 genommen wird, wenn sich der erste und der zweite Lenker 56 und 62 entlang der Linie C befinden, wie dies der Fall ist, wenn sich der Kolben 48 in seiner vollkommen ausgefahrenen in Figur 2 gezeigten Stellung befindet. Es wird weiterhin darauf hingewiesen, daß die beiden Lenker 56 und 62 jeweils als ein Paar in der Querrichtung einen Abstand zueinander aufweisender Lenker ausgebildet sein könnten. Die Betätigungsvorrichtung 50 würde dann an der Verbindungsstelle 54 (Bolzen) an einer Stelle zwischen dem Paar von Lenkern angeschlossen werden, die den ersten Lenker 56 bilden. Die Lagerstelle 64 würde sich dann zwischen dem Paar von Lenkern erstrecken, die den zweiten Lenker 62 bilden, und dann durch einen Halter verlaufen, der einen Teil des Kolbens 48 bildet. Es wird daher erkannt, daß der Kolben 48 den Gleiter eines Gleitkurbelmechanismus bildet, der einen ersten Lenker 56 als Kurbelarm und einen zweiten Lenker 62 als Pleuelstange enthält. Obwohl sich das von beiden Lenkern 56 und 62 gebildete Gestänge nicht über eine Totpunktstellung hinausbewegt, könnte es als ein Kniemechanismus oder Kniegelenk bezeichnet werden. Wenn auch das bevorzugte Ausführungsbeispiel eine Betätigungsvorrichtung 50 zeigt, die an den ersten Lenker 56 an einer Stelle zwischen gegenüberliegenden Enden des ersten Lenkers 56 angeschlossen ist, könnte des weiteren die Betätigungsvorrichtung 50 an irgendeiner Stelle zwischen der Lagerstelle 58 und der Lagerstelle 64 angeschlossen werden, zum Beispiel könnte die Betätigungsvorrichtung 50 an dem Bolzen 60 oder an einem Punkt entlang der Länge des zweiten Lenkers 62 angeschlossen werden, wobei sich der Betrieb noch in einer besseren Art als der der bekannten Vorrichtungen darstellt, bei denen die Betätigungsvorrichtung direkt an den Kolben 48 angeschlossen ist.

Jedenfalls ist es wichtig zu bemerken, daß die Hebelkraft, die von den beiden Lenkern 56, 62 auf den Kolben 48 ausgeübt wird, zunimmt, wenn sich die Betätigungsvorrichtung 50 von ihrer ganz ausgefahrenen Stellung (Figur 1) zu ihrer ganz eingefahrenen Stellung (Figur 2) bewegt. Dies paßt genau zu den Krafterfordernissen des Systems, da der Kolben 48 auf zunehmenden Widerstand stößt, wenn er sich zu der Rückseite in dem Ballenpreßraum 48 bewegt, um die Ladung Erntegut gegen den zusammengedrückten Stapel von in dem Ballenpreßraum 18 enthaltenem Erntegut zu verdichten. Die beiden Lenker 56, 62 funktionieren nicht nur zum Vergrößern der Kraftabgabe an der Verbindung mit dem Kolben 48, wenn sich dieser nach hinten bewegt, sondern sie funktionieren auch so, daß sie den Kolben 48 nach hinten über eine Entfernung bewegen, die ungefähr dem Doppelten des Hubs der Betätigungsvorrichtung 50 entspricht. Dementsprechend kann die Länge der Betätigungsvorrichtung 50 und die Verdrängung der Pumpe, die Flüssigkeit dorthin liefert, minimiert werden, was in Kostenersparnissen gegenüber den bekannten Systemen resultiert, in denen die Länge der Betätigungsvorrichtung von der Entfernung bestimmt wird, über die der Kolben 48 bewegt werden muß, wenn er sich zwischen seiner ganz zurückgezogenen in seine ganz ausgefahrene Stellung bewegt.

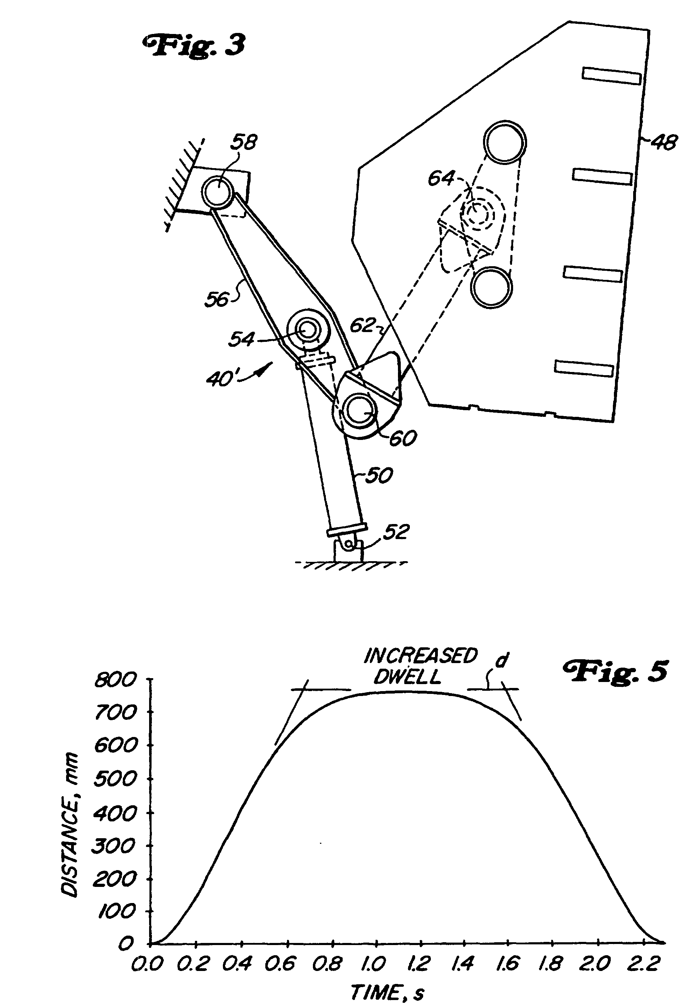

In Figur 3 ist ein Kolbenmechanismus 40' gezeigt, der sich von dem Kolbenmechanismus 40 dadurch unterscheidet, daß er erste und zweite Lenker 56 und 62 enthält, die so angeordnet sind, daß sie ein Spiegelbild ihrer in Figur 1 gezeigten Stellungen sind und zwar in bezug auf die Linie der Zentren C. Das wesentlichste Ergebnis dieser Neuanordnung der Lenker 56, 62 besteht darin, daß die Betätigungsvorrichtung 50 nunmehr vollkommen eingefahren ist, wenn der Kolben 48 wie gezeigt ganz eingefahren ist. Folglich bewirkt das Ausfahren der Betätigungsvorrichtung 50 ein Ausfahren des Kolbens 48, und Druckflüssigkeit, die dem Zylinderende der Betätigungsvorrichtung 50 zugeführt wird, wirkt auf die größere Oberfläche des Kolbens, wobei bemerkt wird, daß die von der Kolbenstange belegte Fläche auf der Kolbenseite des Kolbens nicht für eine Arbeitsleistung zur Verfügung steht.

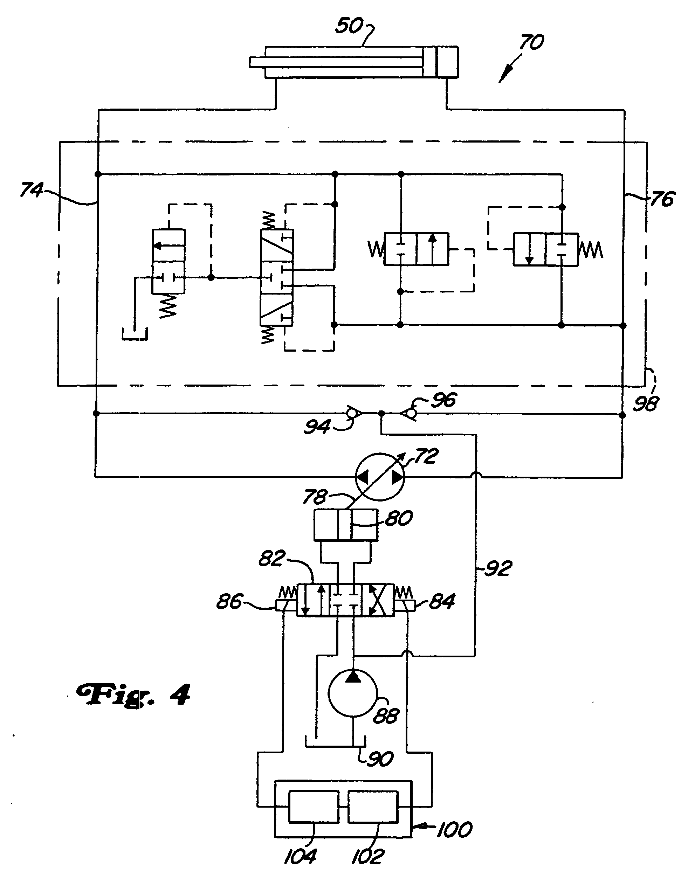

In Figur 4 ist ein elektro-hydraulischer Schaltkreis 70 zum Steuern des Betriebs der Betätigungsvorrichtung 50 des Kolbens 48 gezeigt. Im einzelnen enthält der Schaltkreis 70 eine umkehrbare Pumpe 72 mit veränderlichem Verdrängungsvolumen, deren erste und zweite Anschlüsse jeweils an das zylinderseitige und kolbenseitige Ende der Betätigungsvorrichtung 50 mittels Zufuhr-/Abfuhrleitungen 74 und 76 angeschlossen sind. Die Pumpe 72 enthält eine Schwenkscheibe 78, die mittels einer hier als Hydraulikkolben 80 dargestellten Hydrauliksteuerung zunehmend zu gegenüberliegenden Seiten bezüglich einer mittigen Neutralstellung bewegbar ist, wobei der Hydraulikkolben 80 in einer mittigen Stellung gezeigt ist, in der er die Schwenkscheibe 78 in einer Neutral-Stellung, Null-Verdrängungsstellung hält. Die Steuerung des Hydraulikkolbens 80 und somit die Steuerung der Richtung und der Verdrängung von Flüssigkeit durch die Pumpe 72 wird von einem Steuerventil 82 bewirkt, das von Federn zentriert wird, von Elektromagneten betätigt wird, drei Stellungen einnehmen kann und an seinen jeweiligen Enden Magnete 84 bzw. 86 für vorwärts bzw. rückwärts besitzt, die wahlweise bestromt werden, um den Hydraulikkolben 80 von seiner dargestellten Neutralstellung aus zunehmend nach links und rechts zu bewegen, um jeweils eine vergrößerte Flüssigkeitsverdrängung zu den Zufuhr-/Abfuhrleitungen 74/76 zu bewirken und so ein Einfahren oder Ausfahren der Betätigungsvorrichtung 50 zu bewirken. Im einzelnen bewirkt die Bestromung des Magneten 84, daß das Steuerventil 82 nach rechts schaltet, um eine Pumpe 88 von festem Verdrängungsvolumen mit einem Fußende eines Hydraulikzylinders zu verbinden, der den Hydraulikkolben 80 enthält, während eine Verbindung des Kolbenstangenendes des Hydraulikzylinders zu einem Vorratsbehälter 90 stattfindet. Andererseits bewirkt eine Bestromung des Magneten 86, daß das Steuerventil 82 nach links schaltet, was als Ergebnis hat, daß die Pumpe 88 mit dem Kolbenstangenende des Hydraulikzylinders verbunden wird, der den Hydraulikkolben 80 enthält, während das Fußende des Hydraulikzylinders mit dem Vorratsbehälter 90 verbunden wird. Ein Austausch oder das Laden von Druckflüssigkeit in die Zufuhr-/Abfuhrleitungen 74 bzw. 76 erfolgt mittels einer abgezweigten Ladedruckleitung 92, die Rückschlagventile 94 und 96 enthält, die so arbeiten, daß die Flüssigkeit jeweils in die Zufuhr-/Abfuhrleitungen 74, 76 eingespeist wird, in der Flüssigkeit mit dem geringeren Druck herrscht. Zwischen die Zufuhr-/Abfuhrleitungen 74, 76 ist ein Ventilzusammenbau 98 eingefügt, der Ladedruckventile und Druckbegrenzungsventile enthält, wie dies im Stand der Technik gut bekannt ist.

Die Bedienung der Magneten 84 und 86 wird mittels einer elektrischen Steuerung 100 ausgeführt, wie dies schematisch für die Funktion dargestellt ist, die Stellungssensorschalter 102 bzw. 104 enthält, die abhängig von den jeweiligen Stellungen des Ladegabelzusammenbaus 36 und des Kolbenmechanismus 40 betätigt werden, so daß eine Betätigung der Magneten 84, 86 das Steuerventil 82 für die Stellung der Schwenkscheibe 78 in die entsprechende Richtung schaltet, um den richtigen Betrieb der Betätigungsvorrichtung 50 zu bewirken. Wenn man davon ausgeht, daß sich der Kolben 48 in seiner ganz zurückgezogenen Stellung befindet und der Ladegabelzusammenbau 36 seine in Figur 1 gezeigte Bereitschaftsstellung einnimmt, werden im einzelnen die Stellungssensorschalter 102, 104 derart arbeiten, daß sie einen offenen Kreis zwischen einer elektrischen Kraftquelle (nicht gezeigt) und den Magneten 84 und 82 herstellen. Daher wird sich die Schwenkscheibe 78 der Pumpe 72 in ihrer mittigen Stellung in einem Null-Verdrängungszustand befinden. Sobald Erntegut in den Zuführkanal 26 eingeführt wird und auf die vorgewählte Dichte zusammengedrängt wird, wird die Klappe 38 eine nicht dargestellte Antriebsverbindung zu dem Ladegabelzusammenbau 36 herstellen, die bewirkt, daß letztere angetrieben wird, um ihre Gabeln durch den Zuführkanal 26 nach oben zu bewegen, um eine Ladung Erntegut in den Ballenpreßraum 18 zu bringen. Der Stellungssensorschalter 102 bewirkt dann den Betrieb eines Schalters, der den Magneten 84 an die elektrische Kraftquelle anschließt. Nachdem er bestromt ist, bewirkt der Magnet 84 eine Verstellung des Steuerventils 82 für die Schwenkscheibe 78, so daß die Schwenkscheibe 78 geschwenkt wird, um eine maximale Verdrängung von Flüssigkeit zu dem kolbenseitigen Ende der Betätigungsvorrichtung 50 zu bewirken. Dies bewirkt, daß sich die Betätigungsvorrichtung 50 zurückzieht und den Kolben 48 rückwärts in seine ganz ausgefahrene und in Figur 2 gezeigte Stellung bewegt. Der Stellungssensorschalter 104 erkennt dann den Zustand des Kolbens 48 und funktioniert, um das Öffnen eines Kreises zum Verbinden der elektrischen Stromquelle mit dem Magneten 86 hervorzurufen, und zwar abhängig davon, ob eine oder andere von dem Kolben 48, dem ersten Lenker 56 oder dem zweiten Lenker 62 so positioniert sind, wie sie es wären, wenn der Kolben 48 ganz ausgefahren ist, wie dies in Figur 2 gezeigt ist. Der Stellungssensorschalter 104 erfaßt dann den Zustand des Kolbens 48 und arbeitet abhängig von der einen oder der anderen der Komponenten 48, 56, 62, die eine Lage einnehmen, wie wenn der Kolben 48 ganz ausgefahren ist, wie dies in Figur 2 gezeigt ist, um ein Öffnen des Kreises zu bewirken, der zuvor durch den Betrieb des Stellungssensorschalters 102 geschlossen wurde, und um ein Schließen eines Kreises zu bewirken, damit die elektrische Stromquelle an den Magneten 86 angeschlossen werden kann. Dies resultiert darin, daß das Steuerventil 82 zuerst in seine mittige Neutralstellung zurückkehrt und dann nach links bewegt wird, so daß die Schwenkscheibe 78 so geschwenkt wird, daß eine maximale Verdrängung der Flüssigkeit zu dem Kopfende der Betätigungsvorrichtung 50 erreicht wird, so daß sie ausfährt, um den Kolben 48 in seine in Figur 1 gezeigte zurückgezogene Stellung zurück zu bringen. Wenn der Kolben 48 seine ganz eingefahrene Stellung erreicht, wirkt der Stellungssensorschalter 104 auf den Kreis zu dem Magneten 86 so ein, daß er öffnet, so daß das Steuerventil 82 wiederum zu seiner mittigen Neutralstellung bewegt wird, mit dem Ergebnis, daß die Schwenkscheibe 78 wieder in ihre mittige Null-Verdrängungsstellung zurückgebracht wird.

Der Betrieb der Stellungssensorschalter 102, 104 ist im Zusammenwirken mit dem Kolbenmechanismus 40*'* nach Figur 3 genau der gleiche, wie wenn er mit dem Kolbenmechanismus 40 benutzt würde, mit der Ausnahme, daß das Steuerventil 82 umgekehrt ist, so daß ein Ausfahren des Kolbens 48 in Abhängigkeit von einem Ausfahren der Betätigungsvorrichtung 50 und ein Einfahren des Kolbens 48 in Abhängigkeit von einem Einfahren der Betätigungsvorrichtung 50 bewirkt wird.

In Figur 5 ist ein Diagramm gezeigt, das die Stellung des Kolbens 48 gegenüber der Zeit während eines Zyklus aufgezeigt ist, wenn sich der Kolben 48 von seiner zurückgezogenen Stellung in seine ausgefahrene Stellung und dann in seine zurückgezogene Stellung bewegt. In dem Diagramm ist ein relativ flacher Kurvenabschnitt d zu erkennen, der an der Stelle des Zyklus auftritt, der mit der Zeit korrespondiert, zu der die Schwenkscheibe 78 über ihre neutrale, Null-Verdrängungsstellung geht, wenn sie also von ihrer vollkommen ausgeschwenkten Stellung, in der eine maximale Verdrängung von Flüssigkeit durch die Zufuhr-/Abfuhrleitung 74 auftritt, um ein Einfahren (Ausfahren bei dem Ausführungsbeispiel nach Figur 3) der Betätigungsvorrichtung 50 und ein Ausfahren des Kolbens 48 zu bewirken, zu ihrer Null-Verdrängungsstellung und dann zu ihrer vollkommen ausgeschwenkten Stellung in der entgegengesetzten Richtung gelangt, um eine maximale Verdrängung von Flüssigkeit durch die Zufuhr-/Abfuhrleitung 76 zu bewirken, um ein Ausfahren der Betätigungsvorrichtung 50 (Einfahren in der Ausführungsform nach Figur 3) und ein Einfahren des Kolbens 48 hervorzurufen. Der flache Kurvenverlauf erscheint nicht in einem Kolbensystem, in dem der Kurbelarm 56 über einen 360 Gradbereich wie beispielsweise mittels eines Getriebes angetrieben wird. In einem solchen Antrieb folgt das Verdrängungs-Zeit-Diagramm einer reinen Sinusform, bei der nur ein Punkt an der Oberseite der Kurve darstellt, daß der erste Lenker 56 oder Kurbelarm über die Stellung dreht, in der der Kolben 48 vollkommen ausgefahren ist und zu seiner Stellung zurückkehrt, in der der Kolben 48 vollkommen eingefahren ist. Das Auftreten des flachen Kurvenabschnitts d wird als wichtig von dem Standpunkt des Haltens zusammengedrückten Heus während dieser Verweildauer, die hier mit ca. 0,8 Sekunden angegeben ist, aus gesehen, da das zusammengedrückte Gut dann eine geringere Neigung besitzt, zurückzufedern, sobald sich der Kolben 48 wegbewegt. Dies bewirkt, daß ein festerer Ballen 44 geformt wird. Desweiteren führt die Verweildauer dazu, daß der Kolben 48 das zusammengedrückte Gut für eine angemessene Zeit aus dem Weg hält, um einen ungehemmten Durchgang des Nadelzusammenbaus 42 durch den Ballenpreßraum 18 zu ermöglichen, um Garn zu den Knotern zu bringen und dann in die gezeigte Bereitschaftsstellung zurückzukehren.

## Patentansprüche

1. Presse (10) mit einem Ballenpreßraum (18), einem Kolben (48) und einem hydraulischen Betätigungsglied (50) zum Bewegen des Kolbens (48) in dem Ballenpreßraum (18), **gekennzeichnet durch** einen ersten und einen zweiten Lenker (56) und (62), wobei der erste Lenker (56) einenends in ortsfester Beziehung zu dem Ballenpreßraum (18) schwenkbar gelagert und anderenends schwenkbar mit dem zweiten Lenker (62) verbunden ist, wobei der zweite Lenker (62) einenends mit dem ersten Lenker (56) und anderenends mit dem Kolben (48) schwenkbar verbunden ist, und wobei das Betätigungsglied (50) einenends in ortsfester Beziehung zu dem Ballenpreßraum (18) und anderenends an dem ersten Lenker (56) schwenkbar gelagert ist.

2. Presse nach Anspruch 1, **gekennzeichnet durch** ein Verhältnis der Hublänge des Betätigungsglieds (50) zu der Länge des ersten und des zweiten Lenkers (56) und (62) derart, daß die Hublänge im wesentlichen die Hälfte der Hubbewegung des Kolbens (48) beträgt.

3. Presse nach Anspruch 1 oder 2, **dadurch gekennzeichnet, daß** die Betätigungsvorrichtung (50) zwischen den Lagerstellen (58, 60) des ersten Lenkers (56) an diesem angreift.

4. Presse nach einem oder mehreren der vorherigen Ansprüche, **dadurch gekennzeichnet, daß** die Längsachsen der Betätigungsvorrichtung (50) und der Lenker (56, 62) im wesentlichen senkrecht zueinander verlaufen, wenn der Kolben (48) seine ausgefahrene Stellung einnimmt.

5. Presse nach einem oder mehreren der vorherigen Ansprüche, **dadurch gekennzeichnet, daß** in der ausgefahrenen Stellung des Kolbens (48) die Längsmittenachse des Ballenpreßraums (18) im wesentlichen mit der Längsmittenachse der Lenker (56, 62) zusammenfällt.

6. Presse nach einem oder mehreren der vorherigen Ansprüche, **dadurch gekennzeichnet, daß** bei eingefahrenem Kolben (48) und geknickten Lenkern (56, 62) die Verbindungsstelle (54) der Betätigungsvorrichtung (50) mit dem ersten Lenker (56) und die ortsfeste Lagerung der Betätigungsvorrichtung (50) auf sich gegenüberliegenden Seiten mit Bezug auf die Längsmittenachse des Ballenpreßraums (18) liegen, und daß die Betätigungsvorrichtung (50) ausgefahren ist.

7. Presse nach einem oder mehreren der vorherigen Ansprüche, **dadurch gekennzeichnet, daß** bei eingefahrenem Kolben (48) und geknickten Lenkern (56, 62) die Verbindungsstelle der Betätigungsvorrichtung (50) mit dem ersten Lenker (56) und die ortsfeste Lagerung der Betätigungsvorrichtung (50) auf der gleichen Seite mit Bezug auf die Längsmittenachse des Ballenpreßraums (18) liegen, und daß die Betätigungsvorrichtung (50) eingefahren ist.

8. Presse nach einem oder mehreren der vorherigen Ansprüche, **dadurch gekennzeichnet, daß** die Betätigungsvorrichtung (50) und die Lenker (56, 62) eine gemeinsame Lagerstelle (60) aufweisen.

9. Presse nach einem oder mehreren der vorherigen Ansprüche, **dadurch gekennzeichnet, daß** die Betätigungsvorrichtung (50) anstatt an dem ersten Lenker (56) an dem zweiten Lenker (62) schwenkbar angreift.

10. Presse nach einem oder mehreren der vorherigen Ansprüche, **gekennzeichnet durch** einen Hub der Betätigungsvorrichtung (50) derart, daß die Lagerstelle (60) zwischen den beiden Lenkern (56, 62) aus einer Stellung einerseits in eine Stellung andererseits der Längsmittenachse der gestreckten Lenker (56, 62) bringbar ist.

## Claims

1. A baler (10) with a bale compaction chamber (18), a piston (48) and a hydraulic actuating member (50) for moving the piston (48) into the bale compaction chamber (18), **characterized by** first and second links (56) and (62), wherein the first link (56) is pivotally mounted at one end in positionally fixed relationship to the bale compaction chamber (18) and is pivotally connected at the other end to the second link (62), wherein the second link (62) is pivotally connected at one end to the first link (56) and at the other end to the piston (48), and wherein the actuation member (50) is pivotally mounted at one end in positionally fixed relationship to the bale compaction chamber (18) and at the other end on the first link (56).

2. A baler according to claim 1, **characterized by** such a ratio between the stroke length of the actuating member (50) and the length of the first and second links (56) and (62) that the stroke length amounts substantially to half the stroke movement of the piston (48).

3. A baler according to claim 1 or 2, **characterized in that** the actuating device (50) engages between the mounting points (58, 60) of the first link (56).

4. A baler according to one or more of the preceding claims, **characterized in that** the longitudinal axes of the actuating device (50) and of the links (56, 62) run substantially perpendicular to one another when the piston (48) assumes it extended position.

5. A baler according to one or more of the preceding claims, **characterized in that** the longitudinal central axis of the bale compaction chamber (18) substantially coincides with the longitudinal central axis of the links (56, 62) in the extended position of the piston (48).

6. A baler according to one or more of the preceding claims, **characterized in that** the point of connection (54) of the actuating device (50) to the first link (56) and the positionally fixed mounting of the actuating device (50) lie on opposite sides relative to the longitudinal central axis of the bale compaction chamber (18) with the piston (48) retracted and the links (56, 62) buckled, and **in that** the actuating device (50) is extended.

7. A baler according to one or more of the preceding claims, **characterized in that** the point of connection (54) of the actuating device (50) to the first link (56) and positionally fixed mounting of the actuating device (50) lie on the same side relative to the longitudinal central axis of the bale compaction chamber (18) with the piston (48) retracted and the links (56, 62) kinked, and **in that** the actuating device (50) is retracted.

8. A baler according to one or more of the preceding claims, **characterized in that** the actuating device (50) and the links (56, 62) have a common mounting point (60).

9. A baler according to one or more of the preceding claims, **characterized in that** the actuating device (50) engages on the second link (62) instead of on the first link (56).

10. A baler according to one or more of the preceding claims, **characterized by** a stroke of the actuating device (50) such that the mounting point (60) between the two links (56, 62) can be brought out of a position on one side of the longitudinal central axis of the extended links (56, 62) into a position on the other side.

## Revendications

1. Presse à balles (10) avec une chambre de compression (18), un piston (48) et un dispositif d'entraînement hydraulique (50) pour le déplacement du piston (48) dans la chambre de compression (18), **caractérisée par** un premier et un deuxième bras oscillant (56) et (62), le premier bras oscillant (56) étant monté de manière pivotante et fixe par rapport à la chambre de compression (18) par l'une de ses extrémités et relié de manière pivotante au deuxième bras oscillant (62) par son autre extrémité, le deuxième bras oscillant (62) étant relié de manière pivotante au premier bras oscillant (56) par l'une de ses extrémités et au piston (48) par son autre extrémité et le dispositif d'entraînement hydraulique (50) étant monté de manière pivotante et fixe par rapport à la chambre de compression (18) par l'une de ses extrémités et de manière pivotante au premier bras oscillant (56) par son autre extrémité.

2. Presse à balles conforme à la revendication 1, **caractérisée par** un rapport entre la longueur de course du dispositif d'entraînement (50) et la longueur du premier et du deuxième bras oscillant (56) et (62) tel que la longueur de course correspond pour l'essentiel à la moitié de la course du piston (48).

3. Presse à balles conforme à la revendication 1 ou 2, **caractérisée en ce que** le dispositif d'entraînement (50) s'applique au premier bras oscillant (56) entre les points d'appui (58, 60) de ce dernier.

4. Presse à balles conforme à une ou plusieurs des revendications précédentes, **caractérisée en ce que** les axes longitudinaux du dispositif d'entraînement (50) et des bras oscillants (56, 62) sont pour l'essentiel perpendiculaires l'un par rapport à l'autre lorsque le piston (48) adopte sa position avancée.

5. Presse à balles conforme à une ou plusieurs des revendications précédentes, **caractérisée en ce que** l'axe longitudinal central de la chambre de compression (18) coïncide pour l'essentiel avec l'axe longitudinal central des bras oscillants (56, 62) en position avancée du piston (48).

6. Presse à balles conforme à une ou plusieurs des revendications précédentes, **caractérisée en ce que** la jonction (54) du dispositif d'entraînement (50) et du premier bras oscillant (56) et le logement fixe du dispositif d'entraînement (50) occupent des côtés opposés par rapport à l'axe longitudinal central de la chambre de compression (18) lorsque le piston (48) est en position de retrait et que les bras oscillants (56, 62) sont infléchis et **en ce que** le dispositif d'entraînement (50) est alors sorti.

7. Presse à balles conforme à une ou plusieurs des revendications précédentes, **caractérisée en ce que** la jonction du dispositif d'entraînement (50) et du premier bras oscillant (56) et le logement fixe du dispositif d'entraînement (50) se trouvent du même côté par rapport à l'axe longitudinal central de la chambre de compression (18) lorsque le piston (48) est en position de retrait et que les bras oscillants (56, 62) sont infléchis et **en ce que** le dispositif d'entraînement (50) est alors rentré.

8. Presse à balles conforme à une ou plusieurs des revendications précédentes, **caractérisée en ce que** le dispositif d'entraînement (50) et les bras oscillants (56, 62) possèdent un point d'appui commun (60).

9. Presse à balles conforme à une ou plusieurs des revendications précédentes, **caractérisée en ce que** le dispositif d'entraînement (50) s'applique de manière pivotante, non pas au premier bras oscillant (56), mais au deuxième bras oscillant (62).

10. Presse à balles conforme à une ou plusieurs des revendications précédentes, **caractérisée par** une course du dispositif d'entraînement (50) telle que le point d'appui (60) entre les deux bras oscillants (56, 62) peut être amené d'une position d'un côté à une position de l'autre côté de l'axe longitudinal central des bras oscillants (56, 62) allongés.
